(19) Europäisches Patentamt
European Patent Office
Office européen des brevets

(11) Publication number: **0 260 339 B1**

# (12) EUROPEAN PATENT SPECIFICATION

(45) Date of publication of patent specification: **13.03.91**

(51) Int. Cl.5: **C08G 18/38**

(21) Application number: **86112843.7**

(22) Date of filing: **17.09.86**

## (54) Oxazoline/polyol/polyisocyanate polymers and process.

(43) Date of publication of application:
**23.03.88 Bulletin 88/12**

(45) Publication of the grant of the patent:
**13.03.91 Bulletin 91/11**

(84) Designated Contracting States:
**AT BE CH DE FR GB IT LI LU NL SE**

(56) References cited:
**EP-A- 0 001 412**
**US-A- 4 028 312**
**US-A- 4 558 114**
**US-A- 4 640 969**

(73) Proprietor: **Ashland Oil, Inc.**
**1000 Ashland Drive**
**Russell Kentucky 41169(US)**

(72) Inventor: **Goel, Anil B.**
**373 Eastworth Court**
**Worthington Ohio 43085(US)**
Inventor: **Tufts, Timothy A.**
**943 Bernard Road**
**Columbus Ohio 43221(US)**
Inventor: **Blackburn, Peggy A.**
**6958 Kile Road**
**Plain City Ohio 43064(US)**

(74) Representative: **Vossius & Partner**
**Siebertstrasse 4 P.O. Box 86 07 67**
**W-8000 München 86(DE)**

**EP 0 260 339 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for the preparation of interpolymers of oxazolines, polyols and polyisocyanates, to the novel interpolymers thus produced and to some applications for the novel interpolymers.

The reaction of a mono-oxazoline with phenyl isocyanate to give a monomeric product has been described in Ann. Chem. 698,167 (1966) by Nehring and Seeliger. U.S. Patent No. 3,661,861 discloses the reaction of an oxazoline with a diisocyanate in a solvent to produce an air-drying coating material which forms a film by reaction with atmospheric moisture. Providing suitable replacements for methylene B is orthochloraniline in US-A-4,028,312 polyurethanes have been prepared and cured with an oxaroline having a propane-1,3-dihydroxy-2-ylene group in the 2-position. EP-A-0001412 relates to derivatives of polyparabanic acid and to a process for their preparation. These derivatives can have NCO groups capable of curing polyols.

It has now been discovered that the interaction of oxazolines, polyols and polyisocyanates produces thermosetting polymers which are useful in polymer composites and particularly in reaction injection molding (RIM) applications. The novel thermosetting polymers produced in this process have good physical properties.

According to the present application 2-alkyl oxazolines (mono or bis) of general Formula I will react rapidly with mixtures of polyols and polyisocyanates to give thermosetting polymers having good physical properties.

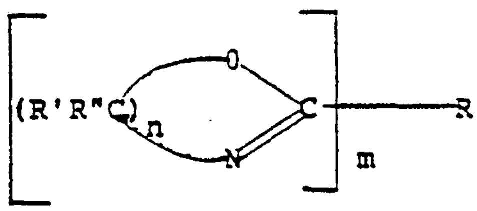

(I)

In Formula I n represents 2 or 3 and m represents 1 or 2. When m is 1, R represents an alkyl group having from 1 to 20 carbon atoms and an alkaryl group having from 7 to 20 carbon atoms; when m is 2, R represents an alkylene group having from I to I9 carbon atoms and R′ and R″ independently represent hydrogen, an alkyl group having from I to I0 carbon atoms or an aryl group having from 6 to 12 carbon atoms. Alternatively, in the case where the polyol is poly(tetramethylene ether)diol, the oxazoline is 2-hydroxy pentyl-4-methyl-4-hydroxy methyl-2-oxazoline.

The polyols useful in this invention include those having at least two hydroxyl groups per molecule and having equivalent weights falling in the range of from 20 to 500. Such polyols include butane diol, cyclohexane dimethanol, tripropylene glycol, amide diols, urethane diols, polyether polyols such as poly (tetramethylene ether) diols, poly (propylene ether) polyols and polyester polyols.

Polyhydroxy polyethers are suitable and preferably those having at least 2 hydroxyl groups per molecule can be used. Polyhydroxy polyethers can be prepared by polymerization of epoxides such as ethylene oxide, propylene oxide, butylene oxide, tetrahydrofuran, styrene oxide, or epichlorohydrin either on their own or by chemical addition to other materials. Suitable other materials include ethylene glycol, propylene glycol, trimethylol propanes and 4,4 dihydroxy diphenyl propane. Sucrose polyethers also may be used. Polybutadienes having hydroxyl groups as well as other known hydroxyl containing vinyl addition polymerized polymers can be used.

According to this invention, hydroxyl containing polyesters, polythioethers, polyacetals, polycarbonates or polyesteramides of the types known for the formation of polyurethanes may also be used.

Particularly useful polyols for the present invention include the following representative aliphatic and aromatic polyhydric alcohols such as ethylene glycol, propylene glycol, trimethylene glycol, triethylene glycol, pentaethylene glycol, polyethylene glycol, I,4-butanediol, diethylene glycol, dipropylene glycol, 2,2-dimethyl-I,3-propanediol, hexamethylene glycol, I,4-cyclohexane dimethanol, xylene alcohols, ethyl resorcinol, propylene resorcinol, 2,4-dimethyl resorcinol, 3,6 dimethyl-I,2,4-benzene triol, dimethylol toluene, dimethylol xylene, bis-hydroxyethyl or bis-hydroxypropyl ethers of resorcinol, catechol, or hydroquinones, I,5-dihydroxy naphthalene and 4,4′-isopropylidene-bis-phenol.

The polyisocyanates useful in this invention include organic isocyanates having at least two isocyanate groups per molecule. The polyisocyanates can be of low, high or intermediate molecular weight and can be any of a wide variety of organic polyisocyanates including ethylene diisocyanate, trimethylene diisocyanate,

dodecamethylene diisocyanate, hexamethylene diisocyanate, hexamethylene diisocyanate trimer, tetraethylene diisocyanate, pentamethylene diisocyanate, propylene-l, 2-diisocyanate, 2,3-dimethyl tetramethylene diisocyanate, butylene-l,2-diisocyanate, butylene-l,3-diisocyanate, l,4-diisocyanato cyclohexane, cyclopentene-l,3-diisocyanate, p-phenylene diisocyanate, l-methyl phenylene-2,4-diisocyanate, naphthalene-l,4-diisocyanate, toluene diisocyanate, diphenyl-4,4'-diisocyanate, xylylene-l,3-diisocyanate, 4 ,4'-diphenylene methane diisocyanate, 4,4'-diphenylene propane diisocyanate, l,2,3,4-tetraisocyanato butane, butane-l,2,3-triisocyanate, polymethylene polyphenyl isocyanate, and other polyisocyanates having an isocyanate functionality of at least two which are more fully disclosed in U.S. Patent Numbers 3,350,362 and 3,382,2l5. Polyisocyanates which are polymeric in nature including isocyanate prepolymers of all types are included in this invention.

The equivalent ratio of oxazoline to polyol should be in the range of from l:99 to 95:5, respectively. The oxazoline group should be considered bifunctional towards isocyanate functionality. Thus, the equivalent amount of isocyanate functionality with respect to the combined hydroxyl and oxazoline functionality should be in the range of from 0.8:l to 3:l, respectively.

Known polyurethane and isocyanurate catalysts such as organo tin compounds and tertiary amines can be included in the process of this invention. The polymers obtained from the simultaneous or sequential polymerization of oxazolines with polyols and polyisocyanates have been found to have high temperature resistance. The process and products of this invention can be used in the preparation of composite materials by impregnating a reinforcement such as glass fibers or graphite with monomeric or prepolymeric mixtures of these compositions.

Although the polymerization process of this invention can be carried out at room temperature or slightly below, it is within the scope of the invention to conduct the reaction at a temperature in the range of from 20 to 200 °C, preferably 20 to l00 °C and at pressures in the range of from atmospheric up to about 50 bar.

Reactions of polyisocyanates with polyols result in polyurethane formation, whereas oxazoline reaction with isocyanates results in urea and amide group containing polymeric material. Thus, in the instant polymeric system based on interaction of oxazoline/polyol/polyisocyanate, polymers with urethane, amide and urea groups are found in the polymers. In addition to this, isocyanurate groups can be generated in the polymers by the use of known isocyanurate catalysts such as hindered tertiary amines and tetraalkylammonium salts in the polymerization reaction.

Our invention is further illustrated in the following representative examples.

EXAMPLES l-l8

Several experiments were carried out in order to demonstrate the oxazoline/polyol/polyisocyanate reaction. The reactions were carried out in glass jars with thermocouple for recording the reaction temperature. The reactants were initially mixed at room temperature and left undisturbed in the jar for gellation to occur. The gel time was considered to be the maximum exotherm temperature. As can be seen from the results summarized in the Table, all the systems containing some oxazoline reacted at a much faster rate when compared with controls (Examples l, 7, ll, l3 and l5 which are outside the scope of this invention) which did not contain oxazoline.

TABLE

| Example | Polyol (Grams) | Oxazoline (Grams) | Isocyanate Grams) | Exotherm (°C.) | Gel Time (Min.) |
|---|---|---|---|---|---|
| 1 | B.D.(3.0) | - | 10 | None in 30 Min. | Greater Than 30.0 |
| 2 | B.D.(3.0) | 0.2A | 10 | 185 | 2.5 |
| 3 | B.D.(3.0) | 0.3B | 10 | 140 | 5.0 |
| 4 | B.D.(3.0) | 0.25C | 10 | 140 | 5.0 |
| 5 | B.C.(3.0) | 0.25D | 10 | 138 | 4.8 |
| 6 | B.D.(3.0) | 0.3E | 10 | 136 | 5.5 |
| 7 | T.P.G.(4.8) | - | 7.4 | None in 30 Min. | Greater than 30.0 |
| 8 | T.P.G.(4.8) | 0.25A | 7.6 | 129 | 5.0 |
| 9 | T.P.G.(4.8) | 0.25D | 7.6 | 128 | 5.8 |
| 10 | T.P.G.(4.8) | 0.4C | 7.8 | 132 | 4.9 |
| 11 | Teracol 650 (11.2) | - | 4.8 | None in 30 Min. | Greater than 30.0 |
| 12 | Teracol 650 (11.2) | 0.5A | 5.6 | 135 | 5.5 |
| 13 | BHED(8.0) | - | 3.8 | None in 30 Min. | Greater than 30.0 |
| 14 | BHED(8.0) | 0.5A | 4.6 | 138 | 5.0 |
| 15 | Polymeg 1000 (4.9) | - | 11.5 | None in 30 Min. | Greater than 30.0 |
| 16 | Polymeg 1000 (4.9) | 0.5A | 12.5 | 170 | 3.0 |
| 17 | Teracol 650 B.D.(3.0) (8.4) | 0.5F | 4.2 | 150 | 1.9 |
| 18 | Teracol 650 (8.4) | 0.6G | 4.2 | 79 | 7.5 |

((temperature rise within))

In the Table B.D. means Butanediol; T.P.G. means tripropylene glycol; Teracol 650 means 334 hydroxyl equivalent weight poly(tetramethylene ether) diol; BHED means bis-hy droxy ethyl dimerized linoleic acid; Polymeg® l000 means 492 hydroxyl equivalent weight poly (tetramethylene ether) diol; A means 2-ethyl-2-oxazoline; B means 2-undecyl-4,4-dimethyl-2-oxazoline); C means a mixture of 2,2′-dimethylene bis(4,4-dimethyl-l,2-oxazoline), 2,2′-trimethylene bis (4,4-dimethyl-2-oxazoline) and 2,2′-tetramethylene bis(4,4-dimethyl-2-oxazoline); D means 2,2′-tetramethylene bis (4,4-dimethyl-2-oxazoline); E means 2,2′-decamethylene bis(4,4-dimethyl-2-oxazoline); F means 2-hydroxypentyl-4-methyl-4-hydroxy methyl-2-oxazoline and G means 2-(methyl propylene) bis(2-oxazoline). The isocyanate used was liquid 4,4′-methylene bis(phenyl isocyanate).

EXAMPLE l9

2-Ethyl-2-oxazoline (40g) and 33g of poly (tetramethylene ether) diol (hydroxyl equivalent weight of 492) were mixed and degassed on a rotary evaporator. This solution was mixed rapidly with l30g of degassed liquid 4,4′-methylene bis (phenyl isocyanate) (isocyanate equivalent weight of l44) and the resulting mixture was poured into a mold formed by two mold release agent coated parallel glass plates held apart by 3.2mm (l/8) inch spacers. The mold was kept in an oven at l00° C. for one hour followed by postcuring for one hour each at l45, l65, l80 and 200° C. The resulting solid opaque polymer sheet was found to have a notched izod impact strength (ASTM-D256) of 0.3 Nm/cm (0.5 foot pounds/inch) of notch and a heat distortion temperature (ASTM-D648) of 220° C.

EXAMPLE 20

This example is for comparative purposes only and is outside the scope of the present invention. Following the procedure of Example l9 a polymer sheet was prepared from a mixture of 50g of the oxazoline and l52g of the polyisocyanate. The resulting sheet was found to be too brittle to be tested for its physical properties such as izod impact strength and heat distortion temperature.

EXAMPLE 2l

The procedure of Example l9 was followed using 29.5g of the oxazoline, 29.5g of bis-hydroxy ethyl dimerized linoleic acid (hydroxyl equivalent weight of 320) in place of the poly (tetramethylene ether) diol, 0.3g of a tertiary amine catalyst (N,N′,N″-tris(dimethyl amino propyl)hexahydrotriazine) and l08.5g of the polyisocyanate. The resulting polymer sheet was found to have a notched izod impact of 0.3 Nm/cm (0.5 foot pound/inch) of notch, a heat distortion temperature of 205° C., flexural strength (ASTM-D790) of 1133 bar (l6,43l psi) and a flexural modulus of 20494 bar (297,l37 psi).

EXAMPLE 22

The procedure of Example 2l was followed using 3lg of the oxazoline, 62.lg of the bis-hydroxy ethyl dimerized linoleic acid, 0.3g of the catalyst and ll6g of the polyisocyanate. The resulting polymer sheet was found to have a notched izod impact strength of 90.3 Nm/cm (0.5 foot pounds/inch) of notch, a heat distortion temperature of l43° C., flexural strength of 766 bar (ll,lll) psi and flexural modulus of 13901 bar (20l,544 psi).

EXAMPLE 23

A mixture of l4.8g of the oxazoline, and l4.8g of the polyol described in Example 2l was degassed and mixed with 54.3g of the polyisocyanate of Example 21. This solution was used to impregnate 10 layers of a 10.2 cm (4″) wide and 15.2 (6″) long glass cloth. The impregnated cloth was placed between the surfaces of a steel mold about 68.9 to 138 mbar (1 to 2 psi) was applied to the mold and the material was cured at 100° C for one hour followed by postcuring in the mold for one hour each at 140, 160, and 185° C. The resulting reinforced composite material which contained 62% glass was found to have a notched izod impact strength of 7.1 Nm/cm (13.3 foot pounds/inch) of notch (hinged break), heat distortion temperature

greater than 220°C., flexural strength of 2901 bar (42,054 psi) and a flexural modulus of 129173 bar (1,872,886 psi).

EXAMPLE 24

A glass reinforced composite was prepared by following the procedure of Example 23 using 14.8g of the oxazoline, 13.2g of poly (tetramethylene ether) diol (hydroxyl equivalent weight of 492) as the polyol and 54g of the polyisocyanate. The resulting cured composite which contained 66% glass was found to have a notched izod impact strength of 8.2 Nm/cm (15.3 foot pounds/inch) of notch (hinged break), a heat distortion temperature of greater than 220°C., a flexural strength of 38,829 psi and a flexural modulus of 2678 bar (1,582,432 psi).

EXAMPLE 25

A solution of 40g of the oxazoline, 33g of the poly (tetramethylene ether) diol and 135g of the polyisocyanate was prepared by the procedure of Example 19. This solution was injected onto a glass mat placed in a steel mold with Teflon liner and was cured for one hour each at 100, 140, 160 and 180°C. The resulting polymer composite which contained 30% glass was found to have a notched izod impact strength of 4.4 Nm/cm (8.3 foot pounds/inch) of notch, a heat distortion temperature of greater than 210°C., a flexural strength of 1454 bar (21,082 psi), and a flexural modulus of 41468 bar (601,241 psi).

## Claims

1. A polymer which is obtained by interpolymerizing an oxazoline, a polyol and a polyisocyanate at a temperature in the range of from 20°C to 200°C at a pressure in the range of from atmospheric up to about 50 bar, wherein the oxazoline conforms to the formula

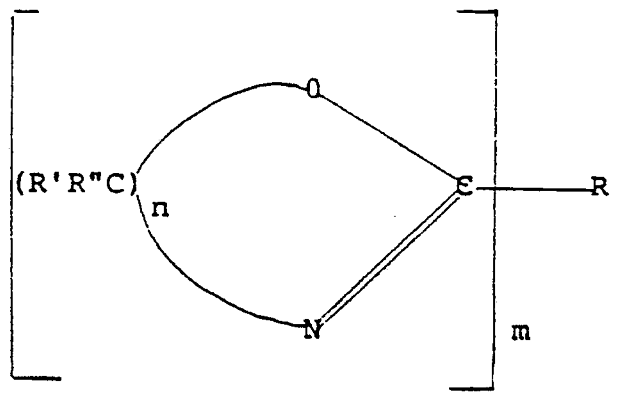

(I)

wherein R' and R" independently represent hydrogen, an alkyl group having from 1 to 10 carbon atoms or an aryl group containing from 6 to 12 carbon atoms and n represents 2 or 3 and m represents 1 or 2 and when m is 1, R represents an alkyl group containing from 1 to 20 carbon atoms or an alkaryl group containing from 7 to 20 carbon atoms; when m is 2, R represents an alkylene group containing from 1 to 19 carbon atoms or wherein the polyol is poly(tetramethylene ether) diol and the oxazoline is 2-hydroxy pentyl-4-methyl-4-hydroxy methyl-2-oxazoline.

2. A process for preparing the polymer of claim 1 comprising interpolymerizing at a temperature in the range of from 20°C to 200°C at a pressure in the range of from atmospheric up to about 50 bar an oxazoline of the formula I according to claim 1, a polyol and a polyisocyanate including the case wherein the polyol is poly(tetramethylene ether) diol and the oxazoline is 2-hydroxy pentyl-4-methyl-4-hydroxy methyl-2-oxazoline.

3. The process of Claim 2 wherein the equivalent ratio of oxazoline to polyol is in the range of from 1:99 to 95:5, respectively and the equivalent amount of isocyanate functionality with respect to the combined polyol hydroxyl and oxazoline functionality is in the range of from 0.8:1 to 3:1, respectively.

4. The process of Claim 3 wherein the polyol is one having at least two hydroxyl groups per molecule and has an equivalent weight falling in the range of from 20 to 500.

5. The process of Claim 4 wherein the polyisocyanate is an organic isocyanate having at least two isocyanate groups per molecule.

6. The process of Claim 5 wherein the polyisocyanate is a diisocyanate.

7. The process of Claim 6 wherein the polyol is butane diol and the oxazoline is 2-ethyl-2-oxazoline.

8. The process of Claim 6 wherein the polyol is butane diol and the oxazoline is 2-undecyl-4,4-dimethyl-2-oxazoline.

9. The process of Claim 6 wherein the polyol is butane diol and the oxazoline is a mixture of 2,2'-dimethylene bis(4,4-dimethyl-2-oxazoline), 2,2'-tri-methylene bis(4,4-dimethyl-2-oxazoline) and 2,2'-tetramethylene bis(4,4-dimethyl-2-oxazoline).

10. The process of Claim 6 wherein the polyol is butane diol and the oxazoline is 2,2'-tetramethylene bis-(4,4-dimethyl-2-oxazoline).

11. The process of Claim 6 wherein the polyol is butane diol and the oxazoline is 2,2'-decamethylene bis-(4,4-dimethyl-2-oxazoline).

12. The process of Claim 6 werein the polyol is tripropylene glycol and the oxazoline is 2-ethyl-2-oxazoline.

13. The process of Claim 6 wherein the polyol is tripropylene glycol and the oxazoline is 2,2-tetramethylene bis(4,4-dimethyl-2-oxazoline).

14. The process of Claim 6 wherein the polyol is tripropylene glycol and the oxazoline is a mixture of 2,2`-dimethylene bis (4, 4-dimethyl-l, 2-oxazoline), 2,2'trimethylene bis(4,4-dimethyl-2-oxazoline) and 2,2'tetramethylene bis(4,4-dimethyl-2-oxazoline).

15. The process of Claim 6 wherein the polyol is poly(tetramethylene ether) diol and the oxazoline is 2-ethyl-2-oxazoline.

16. The process of Claim 6 wherein the polyol is bis-hydroxyethyl dimerized linoleic acid and the oxazoline is 2-ethyl-2-oxazoline.

17. The process of Claim 6 wherein the polyol is poly(tetramethylene ether) diol and the oxazoline is 2-(methyl propylene) bis(2-oxazoline).

18. The use of the polymer of claim 1 in polymer composites and reaction injection molding applications.

**Revendications**

1. Un polymère qui est obtenu en interpolymérisant une oxazoline, un polyol et un polyisocyanate à une température dans la gamme de 20 à 200 °C sous une pression dans la gamme de la pression atmosphérique à environ 50 bar, dans lequel l'oxazoline répond à la formule

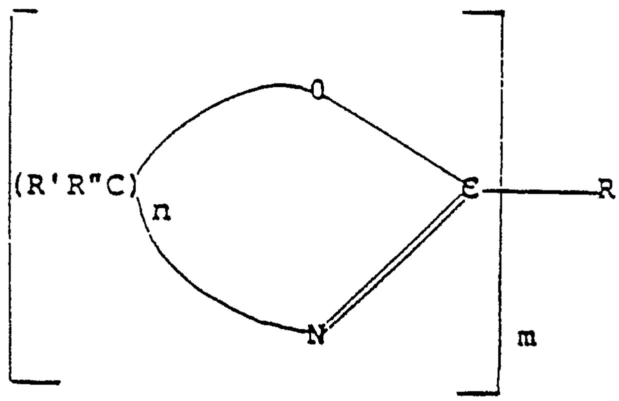

(I)

dans laquelle R' et R" représentent indépendamment l'hydrogène, un groupe alkyle en $C_1$ -$C_{10}$ ou un groupe aryle en $C_6$-$C_{12}$ et n représente 2 ou 3 et m représente 1 ou 2 ; et, lorsque m est égal à 1, R représente un groupe alkyle en $C_1$-$C_{20}$ ou un groupe alkylaryle en $C_7$-$C_{20}$ ; lorsque m est égal à 2, R représente un groupe alkylène en $C_1$-$C_{19}$ ; ou bien dans lequel le polyol est un poly-(tétraméthylèneéther)diol et l'oxazoline est la 2-hydroxypentyl-4-méthyl-4-hydroxyméthyl-2-oxazoline.

2. Un procédé pour fabriquer le polymère selon la revendication 1, comprenant l'interpolymérisation à une température dans la gamme de 20 à 200°C sous une pression dans la gamme de la pression atmosphérique à environ 50 bar d'une oxazoline de formule I selon la revendication 1, d'un polyol et d'un polyisocyanate, comprenant le cas dans lequel le polyol est un poly-(tétraméthylèneéther)diol et l'oxazoline est la 2-hydroxypentyl-4-méthyl-4-hydroxyméthyl-2-oxazoline.

3. Le procédé selon la revendication 2, dans lequel le rapport d'équivalents de l'oxazoline au polyol est dans la gamme de 1:99 à 95:5 et la quantité équivalente de fonctionnalité d'isocyanate par rapport à la fonctionnalité combinée d'hydroxyle et d'oxazoline doit être dans la gamme de 0,8:1 à 3:1.

4. Le procédé selon la revendication 3, dans lequel le polyol est un polyol ayant au moins deux groupes hydroxyles par molécule et un poids équivalent dans la gamme de 20 à 500.

5. Le procédé selon la revendication 4, dans lequel le polyisocyanate est un isocyanate organique ayant au moins deux groupes isocyanates par molécule

6. Le procédé selon la revendication 5, dans lequel le polyisocyanate est un diisocyanate.

7. Le procédé selon la revendication 6, dans lequel le polyol est le butanediol et l'oxazoline est la 2-éthyl-2-oxazoline.

8. Le procédé selon la revendication 6, dans lequel le polyol est le butanediol et l'oxazoline est la 2-undécyl-4,4-diméthyl-2-oxazoline.

9. Le procédé selon la revendication 6, dans lequel le polyol est le butanediol et l'oxazoline est un mélange de 2,2'-diméthylènebis(4,4-diméthyl-2-oxazoline), de 2,2'-triméthylènebis(4,4-diméthyl-2-oxazoline) et de 2,2'-tétraméthylènebis(4,4-diméthyl-2-oxazoline).

10. Le procédé selon la revendication 6, dans lequel le polyol est le butanediol et l'oxazoline est la 2,2'-tétraméthylènebis(4,4-diméthyl-2-oxazoline).

11. Le procédé selon la revendication 6, dans lequel le polyol est le butanediol et l'oxazoline est la 2,2'-décaméthylènebis(4,4-diméthyl-2-oxazoline).

12. Le procédé selon la revendication 6, dans lequel le polyol est le tripopylèneglycol et l'oxazoline est la 2-éthyl-2-oxazoline.

13. Le procédé selon la revendication 6, dans lequel le polyol est le tripropylèneglycol et l'oxazoline est la

2,2-tétraméthylènebis(4,4-diméthyl-2-oxazoline).

14. Le procédé selon la revendication 6, dans lequel le polyol est le tripropylèneglycol et l'oxazoline est un mélange de 2,2'-diméthylènebis(4,4-diméthyl-1,2-oxazoline), 2,2'-triméthylènebis(4,4-diméthyl-2-oxazoline) et 2,2'-tétraméthylènebis(4,4-diméthyl-2-oxazoline).

15. Le procédé selon la revendication 6, dans lequel le polyol est le polytétraméthylèneéther)diol et l'oxazoline est la 2-éthyl-2-oxazoline.

16. Le procédé selon la revendication 6, dans lequel le polyol est l'acide bis-hydroxyéthyl-linoléique dimérisé et l'oxazoline est la 2-éthyl-2-oxazoline.

17. Le procédé selon la revendication 6, dans lequel le polyol est le polytétraméthylèneéther)diol et l'oxazoline est la 2-(méthylpropylène)bis(2-oxazoline).

18. L'utilisation du polymère selon la revendication 1 dans les composites de polymères et les applications par réaction du moulage par injection.

## Ansprüche

1. Ein Polymer, das durch Mischpolymerisation eines Oxazolins, eines Polyols und eines Polyisocyanats bei einer Temperatur im Bereich von 20° C bis 200° C bei einem Druck im Bereich von Atmosphärendruck bis ungefähr 50 bar erhalten wird, in welchem das Oxazolin der Formel I

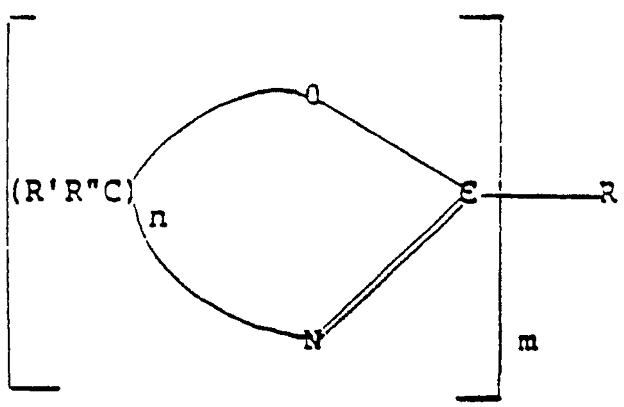

(I)

entspricht, in der R' und R" jeweils unabhängig Wasserstoffatome, Alkylreste mit 1 bis 10 Kohlenstoffatomen oder Arylreste mit 6 bis 12 Kohlenstoffatomen darstellen und n 2 oder 3 und m 1 oder 2 ist, und wenn m 1 ist, R einen Alkylrest mit 1 bis 20 Kohlenstoffatomen oder einen Alkarylrest mit 7 bis 20 Kohlenstoffatomen darstellt, wenn m 2 ist, R einen Alkylenrest mit 1 bis 19 Kohlenstoffatomen darstellt oder in welchem das Polyol Poly(tetramethylenether)diol und das Oxazolin 2-Hydroxypentyl-4-methyl-4-hydroxymethyl-2-oxazolin ist.

2. Verfahren zur Herstellung des Polymers nach Anspruch 1, umfassend das Mischpolymerisieren eines Oxazolins der Formel I gemäß Anspruch 1, eines Polyols und eines Polyisocyanats einschließlich des Falles, in welchem das Polyol Poly(tetramethylenether)diol und das Oxazolin 2-Hydroxypentyl-4-methyl-4-hydroxymethyl-2-oxazolin ist, bei einer Temperatur im Bereich von 20° bis 200° C bei einem Druck im Bereich von Atmosphärendruck bis ungefähr 50 bar.

3. Verfahren nach Anspruch 2, wobei das Äquivalentverhältnis von Oxazolin zu Polyol im Bereich von 1:99 bis 95:5 liegt und die Äquivalentmenge von Isocyanatfunktionalität bezogen auf die vereinigte Polyolhydroxy- und Oxazolinfunktionalität im Bereich von 0,8:1 bis 3:1 liegt.

4. Verfahren nach Anspruch 3, wobei das Polyol wenigstens zwei Hydroxygruppen pro Molekül trägt und ein Äquivalentgewicht im Bereich von 20 bis 500 besitzt.

5. Verfahren nach Anspruch 4, wobei das Polyisocyanat ein organisches Isocyanat mit wenigstens zwei Isocyanatgruppen pro Molekül ist.

6. Verfahren nach Anspruch 5, wobei das Polyisocyanat ein Diisocyant ist.

7. Verfahren nach Anspruch 6, wobei das Polyol Butandiol und das Oxazolin 2-Ethyl-2-oxazolin ist.

8. Verfahren nach Anspruch 6, wobei das Polyol Butandiol und das Oxazolin 2-Undecyl-4,4-dimethyl-2-oxazolin ist.

9. Verfahren nach Anspruch 6, wobei das Polyol Butandiol und das Oxazolin ein Gemisch aus 2,2'-Dimethylenbis (4,4-dimethyl-2-oxazolin), 2,2'-Trimethylenbis (4,4-dimethyl-2-oxazolin) und 2,2'-Tetramethylenbis(4,4-dimethyl-2-oxazolin ist.

10. Verfahren nach Anspruch 6, wobei das Polyol Butandiol und das Oxazolin 2,2'-Tetramethylen-bis (4,4-dimethyl-2-oxazolin) ist.

11. Verfahren nach Anspruch 6, wobei das Polyol Butandiol und das Oxazolin 2,2'-Decamethylen-bis (4,4-dimethyl-2-oxazolin) ist.

12. Verfahren nach Anspruch 6, wobei das Polyol Tripropylenglykol und das Oxazolin 2-Ethyl-2-oxazolin ist.

13. Verfahren nach Anspruch 6, wobei das Polyol Tripropylenglykol und das Oxazolin 2,2-Tetramethylen-bis (4,4-dimethyl-2-oxazolin) ist.

14. Verfahren nach Anspruch 6, wobei das Polyol Tripropylenglykol und das Oxazolin ein Gemisch aus 2,2'-Dimethylen-bis(4,4-dimethyl-1,2-oxazolin), 2,2'-Trimethylen-bis (4,4-dimethyl-2-oxazolin) und 2,2'-Tetramethylen-bis (4,4-dimethyl-2-oxazolin) ist.

15. Verfahren nach Anspruch 6, wobei das Polyol Poly(tetramethylenether)diol und das Oxazolin 2-Ethyl-2-oxazolin ist.

16. Verfahren nach Anspruch 6, wobei das Polyol Bishydroxyethyl dimerisierte Linolsäure und das Oxazolin 2-Ethyl-2-oxazolin ist.

17. Verfahren nach Anspruch 6, wobei das Polyol Poly(tetramethylenether)diol und das Oxazolin 2-(Methylpropylen)bis (2-oxazolin) ist.

18. Die Verwendung des Polymers nach Anspruch 1 in Polymer-zusammensetzungen und Reaktionsspritzguß-Anwendungen.